# EUROPÄISCHE PATENTANMELDUNG

(11) **EP 1 115 083 A2**
(43) Veröffentlichungstag der Anmeldung: **11.07.2001**
(21) Anmeldenummer: 00127716.9
(22) Anmeldetag: 18.12.2000
(51) Int. Cl.: G06K 7/00, G06K 13/08

(54) **Chipkarten-Leseanordnung**

(30) Priorität: 28.12.1999 DE 19963403
(71) Anmelder: NOKIA MOBILE PHONES LTD., 02150 Espoo (FI)
(72) Erfinder: Buschmann, Ulrich, 89275 Elchingen (DE)
(74) Vertreter: TER MEER STEINMEISTER & PARTNER GbR

(57) **Zusammenfassung**

Die Erfindung befaßt sich der Ausbildung von Karten-Leseanordnungen für mit Speichern versehen Karten. Derartige Karten bzw. die im Speicher solcher Karten abgelegte Daten werden in aller Regel zur Herstellung und/oder Aufrechterhaltung von Gebrauchszuständen technischen Geräten. Auch ist es bekannt, daß der Nutzer bestimmte Bereiche des Speicher selbst mit Daten belegen kann. Da aber die Speicherausbildung bzw. Speicherverwendung weitgehend normiert ist und die dem Nutzer zur freien Verfügung überlassene Speicherkapazität relativ klein ist, kann der dem Nutzer vorbehaltene Speicherbedarf nur dadurch erhöht werden, daß dem Gerät weitere mit Speichern versehene Karten zur Verfügung gestellt werden. Da aber sämtliche in ein Gerät eingesetzte Karten zur Herstellung der vollen Funktionalität in einer vorgegebenen Weise zusammenwirken müssen, ist es Aufgabe der Erfindung eine Karten-Leseanordnung anzugeben, die dies organisiert. Dazu wird angegeben eine Überwachungsanordnung 17 oder ein Verschlußanordnung 24 vorhanden ist, die bei einer in einen ersten Schacht 12.2 eingeschobenen Karte 11.2 die Annahme einer zweiten Karte 11.1 verweigert, bzw. bei mit zwei Karten 11 bestückten Schächten 12 sicherstellt, daß vor der zweiten Karte 11.1 die erste Karte 11.2 auch dem jeweiligen Schacht 12 entfernt wird.

## Beschreibung

### Technisches Gebiet

Die Erfindung befaßt sich der Ausbildung von Karten-Leseanordnungen für mit Speichern versehen Karten.

### Stand der Technik

Gemäß dem Stand der Technik sind Karten-Leseanordnungen für mit Speichern versehene Karten bestens bekannt, so daß auf nähere Einzelheiten hierzu nicht eingegangen zu werden braucht. Zum besseren Verständnis der Erfindung sei jedoch ausgeführt, daß sämtliche bekannten Karten-Leseanordnungen einen mit einer Bestückungsöffnung versehenen Schacht aufweisen, in welchen die mit einem Speicher versehene Karte eingeschoben wird. Da derartige Karten zur Herstellung und/oder Aufrechterhaltung von Gebrauchzuständen von elektrischen Geräten benutzt werden, sind innerhalb des Schachtes Kontakte ausgebildet, die, wenn die Karte in den Schacht eingeschoben ist, an der Karte angebrachte Kontakte kontaktieren und somit den Speicher der Karte mit einer Lese- und/oder Schreibanordnung verbinden. Hierdurch wird erreicht, daß nur bei Vorhandensein von im Speicher der Karte abgelegten Informationen das jeweilige Gerät benutzt werden kann. Derartige mit Speichern versehene Karten können beispielsweise aus der mobilen Kommunikation bekannte SIM-Karten sein, ohne die keine Einbuchung ins Netz ausgeführt werden kann. Häufig sind solche mit Speichern versehene Karten auch so ausgebildet, daß auf den Speicherplätzen des Speichers nicht nur Daten zur Herstellung und/oder Aufrechterhaltung von Gebrauchszuständen abgelegt sind, sondern auch Speicherbereiche vorhanden sind, in die der Nutzer selbst Daten einschreiben kann. In diesem Zusammenhang sei wieder auf die in Mobiltelefonen verwendeten SIM-Karten hingewiesen, die nicht nur die zur Aufrechterhaltung des Gebrauchzustandes von Mobiltelefonen verwendeten Daten enthalten, sondern auch beispielweise vom Nutzer eingegebene Telefonnummern aufnehmen können. Dies ist besonders praktisch, da der Nutzer, wenn er ein anderes Mobiltelefon verwendet, mit dem Einsetzen "seiner" SIM-Karte gleichzeitig sein im Speicher der SIM-Karte abgelegtes Telefonbuch zur Verfügung hat. Durch die Normung der in den Karten vorhandenen Speicher ist allerdings der für die freie Benutzung durch einen Nutzer zur Verfügung gestellte Speicherraum sehr begrenzt. Besonders kritisch ist der durch die Normung hervorgerufene Speicherengpaß deshalb, weil immer mehr Dienste und/oder Anwendungen entstehen, die zur flexiblen Nutzung auf Karten bereitgestellten Speicherplatz benötigen. Dieses Bedürfnis kann beispielweise dadurch befriedigt werden, daß für diese Zwecke wenigstens eine weitere, mit einem Speicher versehene Karte bereitgestellt wird, welche zur Erhöhung der Flexibilität nicht notwendig mit der für den jeweiligen Anwendungsfall genormten Karte identisch sein muß. Da aber mit der Bereitstellung einer weiteren Karte, diese weitere Karte mit der schon vorhanden Karte zusammenwirken muß, ist es Aufgabe der Erfindung eine Methode bzw. eine Karten-Leseanordnung anzugeben, welche bei der Verwendung von zwei Karten mögliche Fehlzustände ausschließt.

### Darstellung der Erfindung

Diese Ausgabe wird mit den in Anspruch 1 und Anspruch 2 angegebenen Merkmalen gelöst. Vorteilhafte aus Aus- und Weiterbildungen der Erfindung sind den Ansprüchen 3 bis 9 entnehmbar.

Das grundlegende Prinzip, welches die Ansprüche 1 und 2 verbindet, ist darin zu sehen, daß eine bestimmte Reihefolge beim Bestücken der Schächte mit Karten bzw. beim Entfernen der Karten eingehalten wird. Ist gemäß Anspruch 1 ein zweiter, ebenfalls eine Bestückungsöffnung habender Schacht zur Aufnahme einer mit einem Speicher versehenen weiteren Karte vorgesehen und ist an der Bestückungsanordnung des zweiten Schachts eine Verschlußanordnung vorgesehen ist, die bei einem mit einer Karte bestückten ersten Schacht das Einführen und das Entnehmen der weiteren Karte in bzw. aus dem zweiten Schacht ausschließt, werden Fehlfunktionen ausgeschlossen, die bei schon eingeschobener bzw. eingebuchter erster Karte durch das nachträgliche Einschieben bzw. Einbuchen oder durch das vorzeitige Herausziehen bzw. Ausbuchen der zweiten Karte entstehen können. Dieser Ablauf wird gemäß Anspruch 2 dadurch sichergestellt, daß eine Überwachungsanordnung vorhanden ist, die zwar nicht ein Einschieben, wohl aber ein Einbuchen einer in den zweiten Schacht eingeschobenen Karte ausschließt, wenn bereits der erste Schacht mit einer Karte bestückt ist, und die bei einer in den zweiten Schacht eingeschobenen Karte deren Lage im zweiten Schacht überwacht und bei eintretenden Lageänderungen die im ersten Schacht befindliche Karte ausbucht.

Die Bestückung der Schächte ist dann besonders einfach, wenn die beiden Schächte übereinander angeordnet sind und die Bestückungsöffnungen der beiden Schächte in die gleiche Richtung weisen.

Ist gemäß Anspruch 4 die Verschlußanordnung eine mit einem Sperrfuß versehene bewegliche Klappe, die in einer ersten Stellung die Bestückungsöffnung des zweiten Schachts freigibt und in ihrer zweiten Stellung die Bestückungsöffnung verschließt, wobei der Sperrfuß bei einer in den ersten Schacht eingesetzten Karte zum Ausschluß der Beweglichkeit der Klappe an der in den ersten Schacht befindlichen Karte 13 anliegt, ist eine besonders kostengünstige Lösung zur Steuerung des B Bestückungsablaufs gegeben.

Besonders bedienerfreundlich ist die Karten-Leseanordnung dann, wenn gemäß Anspruch 5 eine Auswerferanordnung am zweiten Schacht vorgesehen ist, die eine in den zweiten Schacht eingeschobene Karte aus der Bestückungsöffnung herausdrückt, wenn die Verschlußanordnung die Zugänglichkeit der Bestückungsanordnung am zweiten Schacht freigibt.

Der Aufwand für die Auswerferanordnung ist dann sehr gering, wenn gemäß Anspruch 6 die Auswerferanordnung im wesentlichen von einer Mechanik gebildet wird, die erst durch das Schließen und/oder das Öffnen der Verschlußanordnung 24 die mechanische Energie für das Auswerfen der im zweiten Schacht eingeschobenen Karte liefert.

Ist die Karten-Leseanordnung gemäß Anspruch 7 realisiert, sind keine besonderen Schritte oder Bauteile erforderliche, um eine in den zweiten Schacht eingebrachte Karte in ihre Endlage im Schacht zu verbringen. Vielmehr wird bei dieser Realisierung die Karte allein durch die vom Nutzer ausgeführte Einschubbewegung in ihre Endlage verbracht.

Ist gemäß Anspruch 8 ein zweiter Kraftspeicher mit der Verschlußanordnung verbunden, und ist die Karten-Leseanordnung i.ü. wie in Anspruch 9 angegeben ausgebildet, ist sichergestellt, daß die Schießbewegung der Verschlußanordnung durch Unterstützung der im zweiten Kraftspeicher gespeicherten Energie abläuft.

### Kurze Darstellung der Figuren

Es zeigen:
- Fig.1: eine Karten-Leseanordnung im Seitenschnitt;
- Fig.2: eine weitere Karten-Leseanordnung im Seitenschnitt;
- Fig.3: eine Druntersicht auf einen Schieber;
- Fig.4: eine weitere Darstellung gemäß Fig.3;
- Fig.5: eine weitere Darstellung gemäß Fig.3;
- Fig.6: eine weitere Darstellung gemäß Fig. 3;
- Fig.7a-c: drei Darstellungen von zwei ortfesten Rampen und
- Fig.8a-e: fünf schematische Darstellungen eines Schiebers mit Klappe.

### Wege zum Ausführen der Erfindung

Die erfindungsgemäße Katen-Leseanordnung soll nun anhand der Figuren näher erläutert werden.

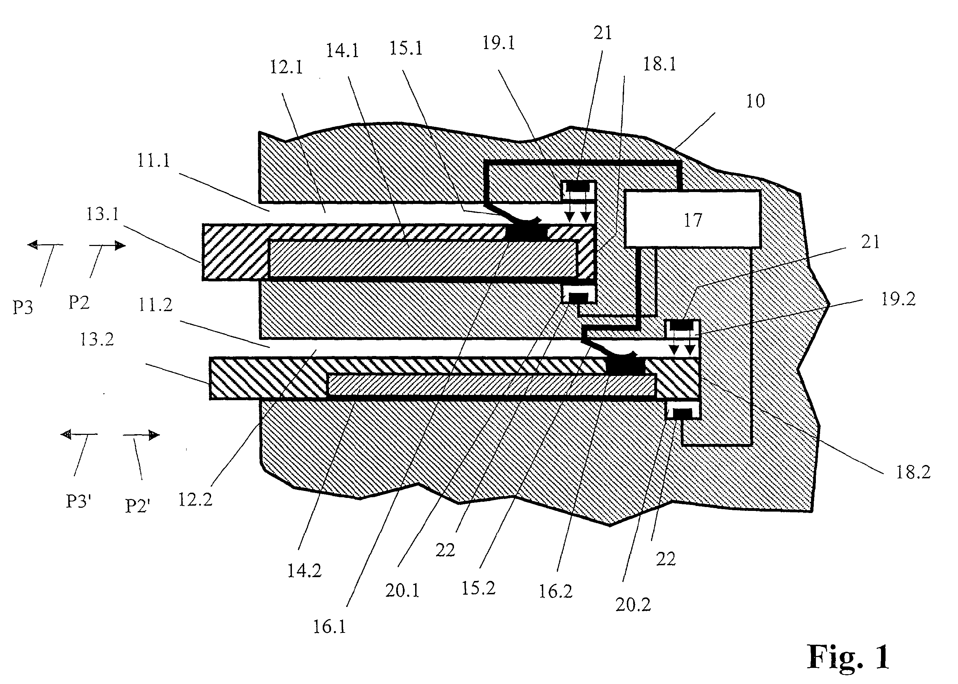

In Fig. 1 ist ein Gehäuseteil 10 gezeigt, welches zwei Bestückungsöffnungen 11.1 und 11.2 verfügt. An jede der beiden Bestückungsöffnungen 11.1, 11.2 schließt ein Schacht 12.1.und 12.2 an.

In den ersten Schacht 12.1 ist eine Karte 13.1 eingeschoben, welche mit einem Speicher 14.1 ausgestattet ist. Außerdem sind im Schacht 12.1 Federkontakte 15.1 vorgesehen, welche bei einer in den Schacht 12.1 eingesteckten Karte 13.1 an mit dem Speicher 14.1 verbundenen Kontaktflächen 16.1 anliegen.

Auch in den zweiten Schacht 12.2 ist eine Karte 13.2 eingeschoben. Da es sich bei dieser Karte 13.2 um eine zur Herstellung und Aufrechterhaltung einer Mobilfunkstrecke notwendigen SIM-Karte handelt, ist auch diese Karte 13.2 mit einem Speicher 14.2 versehen. Auch sind im Schacht 12.2 Federkontakte 15.2 angebracht, die bei einer in diesen Schacht 12.2 eingesteckten Karte 13.2 an den mit diesem Speicher 14.2 verbundenen Kontaktflächen 16.2 in körperlichem Kontakt stehen.

Jede der in einem Schacht 12.1, 12.2 angeordnete Kontaktfeder 15 ist mit einer Lese- und/oder Schreibanordnung 17 verbunden, mit deren Hilfe die in den Speichern 14.1.und 14.2 enthalten Informationen ausgelesen und/oder eingeschrieben werden können.

Außerdem sind am Ende 18.1, 18.2 eines jeden Schachtes 12.1, 12.2 zwei Taschen 19.1, 19.2, 20.1, 20.2 ausgebildet, welche zur Aufnahme einer Überwachungsanordnung dienen. Im einzelnen ist dies vorliegend so realisiert, daß in jeder Tasche 19 eine Lichtquelle 21 und in jeder Tasche 20 ein lichtempfindlicher Sensor 22 angeordnet ist, wobei jeder der Sensoren 22 mit der Lese- und/oder Schreibanordnung 17 in Verbindung steht.

Diese Überwachungsanordnung hat die Aufgabe, die Belegung der Schächte 12 mit Karten 13 zu überwachen bzw. den Ein- bzw. Ausbuchungsvorgang der Karten 13 zu steuern. Dabei wird unter einem Einbuchungsvorgang ein solcher verstanden, bei dem der Speicher 14 einer Karte 13 durch den Kontakt der Kontaktfedern 15 mit den Kontaktflächen mit der Lese- und/oder Schreibanordnung 17 in Datenaustausch tritt, während bei einem Ausbuchvorgang der ehemals bestehende Datenaustausch zwischen einem Speicher 14 und der Lese- und/oder Schreibanordnung 17 beendet wird, indem die bestehende Verbindung getrennt wird..

Ist bei einer in Fig. 1 gezeigten Anordnung keiner der Schächte 12 mit einer Karte 13 bestückt und wird dann die Karte 13.2 in den Schacht 12.2 in Pfeilrichtung P2' eingeführt, wird diese Karte 13.2 eingebucht und die am Ende 18.2 dieses Schachtes 12.2 befindliche Lichtstrecke unterbrochen, wenn die Karte 13.2 -so wie in Fig. 1 gezeigt- ihre Endlage im Schacht 12.2 eingenommen hat. Gleichzeitig mit dem Unterbrechen der Lichtstrecke im Schacht 12.2 werden die Kontaktfedern 15.1 am Schacht 12.1 elektrisch von der Lese- und/oder Schreibanordnung 17 getrennt, so daß eine nachträglich in den Schacht 12.1 in Pfeilrichtung P2 eingeschobene Karte 13.1 in keinen Datenaustausch mehr mit der Lese- und/oder Schreibanordnung 17 treten kann.

Sind die beiden Schächte 12 so wie in Fig. 1 gezeigt mit Karten 13 bestückt, hat die am Schacht 12.1 vorhandene und durch die eingeschobene Karte 13.1 unterbrochene Lichtstrecke die Aufgabe, die Lage bzw. das Vorhandensein der Karte 13.1. ständig zu kontrollieren. Wird nun die Karte 13.1 aus dem Schacht 12.1 plötzlich in Pfeilrichtung P3 herausgezogen, detektiert dies der in der Tasche 20.1 angeordnete Sensor 22 und meldet dies an die Lese- und Schreibanordnung 17, worauf dann die im Schacht 12.2 befindliche Karte 13.2 sofort ausgebucht wird. Um sicherzustellen, daß die Ausbuchung der im Schacht 12.2 befindlichen Karte 13.2 noch zeitlich vor dem Ausbuchen der sich aus dem Schacht 12.1 herausbewegenden Karte 13.1 erfolgt, sollten die Kontaktflächen 16.1 so groß ausgebildet sein, daß der körperliche Kontakt mit den Kontaktfedern 16.1 erst dann aufgehoben wird, wenn die Lichtstrecke am Schacht 12.1 schon geschlossen und die Karte 13.2 ausgebucht ist.

Nur der Vollständigkeit halber sei darauf hingewiesen, daß die Überwachungsanordnung nicht auf die im Zusammenhang mit Fig. 1 gezeigt Ausbildung beschränkt ist, sofern der oder die eingesetzten Sensoren sicherstellen, daß bei einer schon im Schacht 12.2 eingebuchten Karte 13.2 keine Karte 13.1 mehr im Schacht 12.1 eingebucht werden kann bzw. daß bei zwei eingebuchten Karten 13.1, 13.2 immer erst die Karte 13.2 ausgebucht ist, bevor die im Schacht 12.1 befindliche Karte 13.1 ausgebucht wird.

So kann beispielsweise in einem anderen -nicht dargestellten- Ausführungsbeispiel die gemäß Fig. 1 am Ende 18.2 des Schachtes 12.2 vorhandene Lichtstrecke entfallen, wenn die Lese- und/oder Schreibanordnung 17 so modifiziert wird, daß nach einem Einbuchvorgang einer Karte 13.2 bzw. dem elektrischen Kontakt zwischen dem Speicher 14.2 und der Lese- und oder Schreibanordnung 17 diese das Vorhandensein einer Karte 13.2 erkennt und die Verbindung zu Kontaktfedern 15.1 unterbricht, wenn die Lichtstrecke im Schacht 12.1 nicht durch eine Karte 13.1-geschlossen ist.

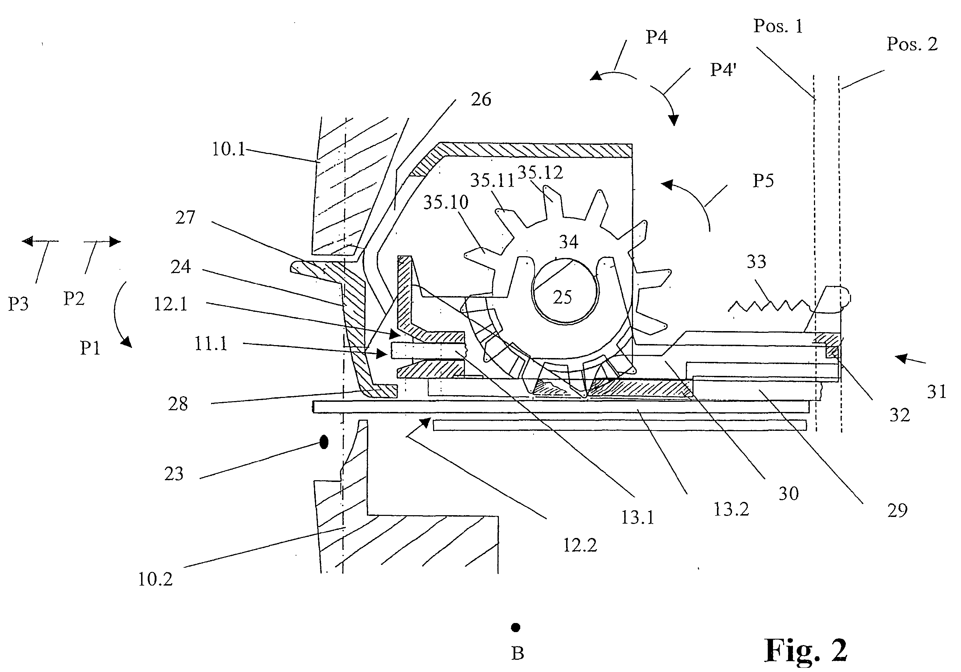

In den Fig. 2 ist eine mechanische Realisierung gezeigt, die verhindert, daß bei einer schon im Schacht 12.2 befindlichen Karte 13.2 durch Einschieben einer Karte 13.1 in den Schacht 12.1 die eingeschobene Karte 13.1 noch eingebucht wird bzw. eine im Schacht 12.1 angeordnete und eingebuchte Karte 13.1 durch Herausziehen aus dem Schacht 12.1 ausgebucht wird, bevor nicht die im Schacht 12.2 befindliche und eingebuchte Karte 13.2 ausgebucht worden ist.

In der Schnittdarstellung gemäß Fig. 2 ist eine Gehäusewandung 10.1, 10.2 gezeigt, die mit einer Öffnung 23 versehen ist. Hinter der Öffnung 23 (im Inneren des Gehäuses) sind die beiden Schächte 12.1 und 12.2 übereinander angeordnet, wobei der Schacht 12.1 mit der Karte 13.1 und der Schacht 12.2 mit der Karte 13.2 bestückt ist. Aus Gründen der Übersichtlichkeit ist in Fig. 2 auf die Darstellung der Speicher in den Karten, der Kontaktflächen und der Federkontakte verzichtet worden.

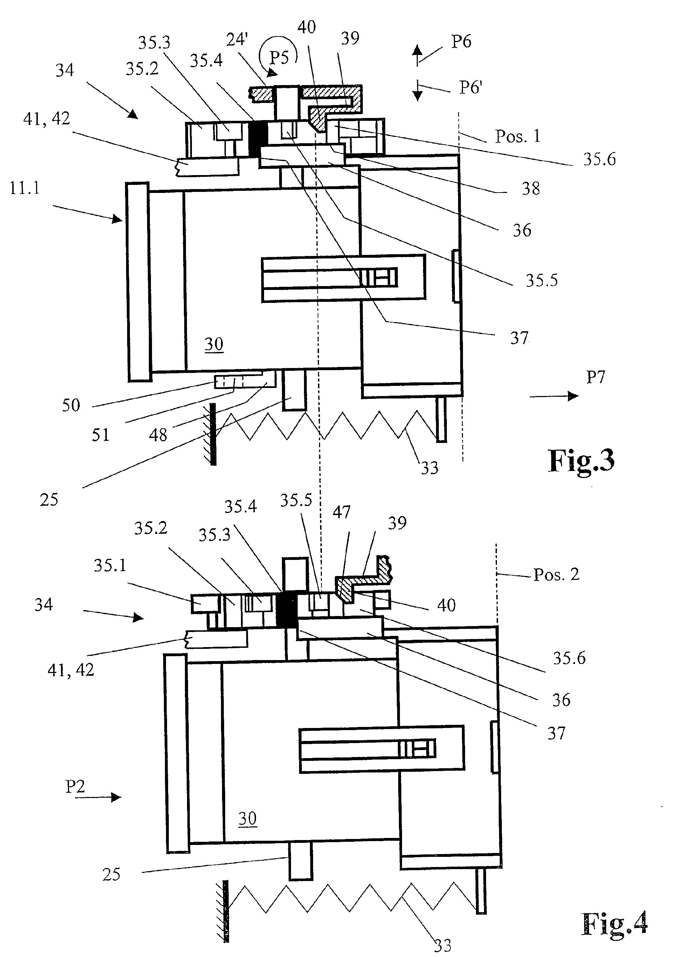

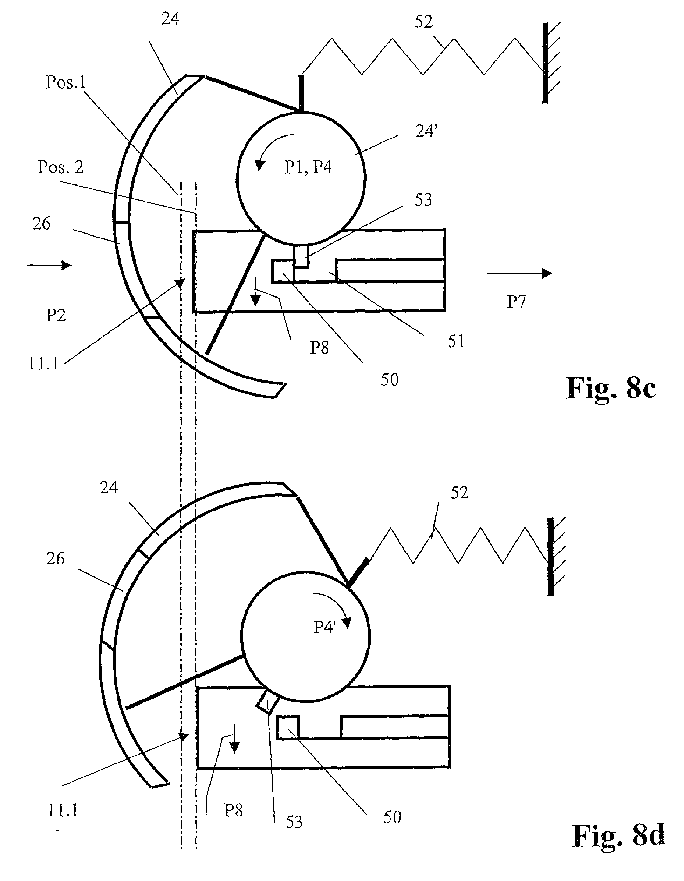

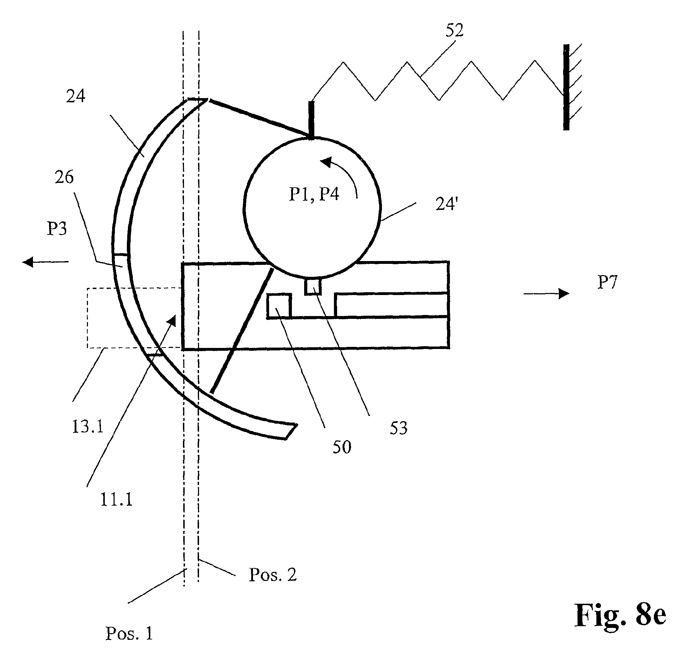

Ferner ist in Fig. 2 eine Verschlußanordnung vorhanden. Diese Verschlußanordnung wird im wesentlichen von einer Klappe 24 gebildet, deren Seitenteile 24' auf einer Welle 25 in Pfeilrichtung P4,P4' drehbar gelagert sind (zur Lagerung siehe auch Fig. 3). Ferner ist die Klappe 24 mit einem Durchbruch 26, einer Griffleiste 27 und einem Sperrfuß 28 versehen. Ist -wie in Fig. 2 gezeigt- die Karte 13.2 in den Schacht 12.2 eingeschoben und liegt die Griffleiste 27 an der Gehäusewandung 10.1 an, verschließen die Klappe 24 und die Karte 13.2 die Öffnung 23. Da -wie der Darstellung gemäß Fig. 2 klar entnehmbar ist- der Sperrfuß 28 der Klappe 24 an der Karte 13.2 anliegt, wird durch den Sperrfuß 28 und die Griffleiste 27 jegliche Bewegung der Klappe 24 in Pfeilrichtung P4, P4' ausgeschlossen. Da gleichzeitig auch die Klappe 24 die Bestückungsöffnung 11.1 des Schachtes 12.1 verschließt, kann eine im Schacht 12.1 befindliche Karte 13.1 nicht aus dem Schacht 12.1 entfernt werden. Soll jedoch eine im Schacht 12.1 befindliche Karte 13.1 aus diesem herausgezogen werden, muß zunächst die im Schacht 12.2 befindliche Karte 13.2 vollständig entfernt werden. Dies ist -wie schon oben ausgeführt- mit einem Ausbuchen der Karte 13.2 verbunden. Ist die Karte 13.2 aus dem Schacht 12.2 herausgezogen, existiert für den Sperrfuß 28 keine Auflagefläche mehr, so daß die Klappe 24 in Pfeilrichtung P1 (P4) so lange nach unten bewegt werden kann, bis die Griffleiste 27 an der Gehäusewandung 10.2 anliegt. Liegt die Griffleiste 27 an der Gehäusewandung 10.2 an, macht der Durchbruch 26 in der Klappe 24 die Bestückungsöffnung 11.1 zugänglich und die Karte 13.1 kann aus dem Schacht 12.1 entnommen werden (siehe auch Fig. 8e).

Auch schließt die in Fig. 2 gezeigte Ausbildung aus, daß bei einer in den Schacht 12.2 eingeschobenen und eingebuchten Karte 13.2 nachträglich eine Karte 13.1 in den Schacht 12.1 eingeschoben werden kann. Dies ist darauf zurückzuführen, daß bei eingeschobener bzw. eingebuchter Karte 13.2 die Griffleiste 27 der Klappe 24 -so wie in Fig. 2 gezeigt- unter gleichzeitiger Verdeckung der Bestückungsöffnung 11.1 des Schachtes 12.1 an der Gehäusewandung 10.1 anliegt.

In folgenden soll nun eine Auswerferanordnung für eine im Schacht 12.1 angeordneten Karte 13.1 näher dargestellt werden.

Wie Fig. 2 entnehmbar ist, wird zu diesem Zweck der Schacht 12.1 von einer ortsfesten Auflage 29 und einem Schlitten 30 gebildet. Der Schlitten 30 ist dabei in Einschub- und Auswerfrichtung (P2, P3) der Karte 13.1 verschiebbar mit der ortfesten Auflage 29 verbunden. Außerdem ist am Ende 31 des Schlittens 30 ein Anschlag 32 vorhanden, an dem die in den Schacht 12.1 eingeschobene Karte 13.1 anliegt, wenn sie ihre Endlage im Schacht 12.1 eingenommen hat. Ferner erstreckt sich zwischen dem Schlitten 30 und der ortfesten Auflage ein mechanischer Kraftspeicher (in Fig. 2 nicht vollständig gezeigt) in der Form einer Feder 33. Schließlich ist ein Zahnrad 34 vorhanden, welches auf der Welle 25 anordnet ist, welches mitsamt der Welle 25 nur eine Drehung entgegen dem Uhrzeigersinn P5 ausführen kann.

Schon an dieser Stelle sei darauf hingewiesen, daß die Zähne 35 des Zahnrades 34, welche eine geradzahlige Ordnungsziffer (35.2, 35.4, 35.6,...) haben, im Vergleich zu den Zähnen 35, die eine ungeradzahlige Ordnungsziffer (35.1, 35.3, 35.5,...) haben, in Richtung der Wellenachse eine größere Breite aufweisen und daß jeweils zwischen zwei Zähnen 35 mit geradzahliger Ordnungsziffer (35.2, 35.4, 36.6,...) ein Zahn 35 mit ungeradzahliger Ordnungsziffer (35.1, 35.3, 35.5,...) plaziert ist.

Den Fig. 3 bis 6, welche ausgehend vom Blickpunkt B in Fig.2 alle eine Druntersicht auf den Schlitten 30 zeigen, ist entnehmbar, daß das Zahnrad 34 seitlich neben dem Schlitten 30 angeordnet ist, daß die Zähne 35 mit den ungeradzahligen Ordnungsziffern (35.1, 35.3, 35.5,...) sich im Vergleich zu den Zähnen 34 mit geradzahligen Ordnungsziffern (35.2, 35.4, 35.6,...) sich weit weniger in Richtung zum Schlitten 30 erstrecken und am Schlitten 30 ein sich in Richtung zum Zahnrad 34 erstreckender Mitnehmer 36 ausgebildet ist, dessen vordere Kante 37 zum körperlichen Kontakt mit den Zähnen 35 mit geradzahliger Ordnungsziffer (35.2, 35.4, 36.6,...) bestimmt ist und dessen Längskante 38 einen geringen Abstand zu den Zähnen 35 mit ungeradzahliger Ordnungsziffer (35.1, 35.3, 35.5,...) einhält.

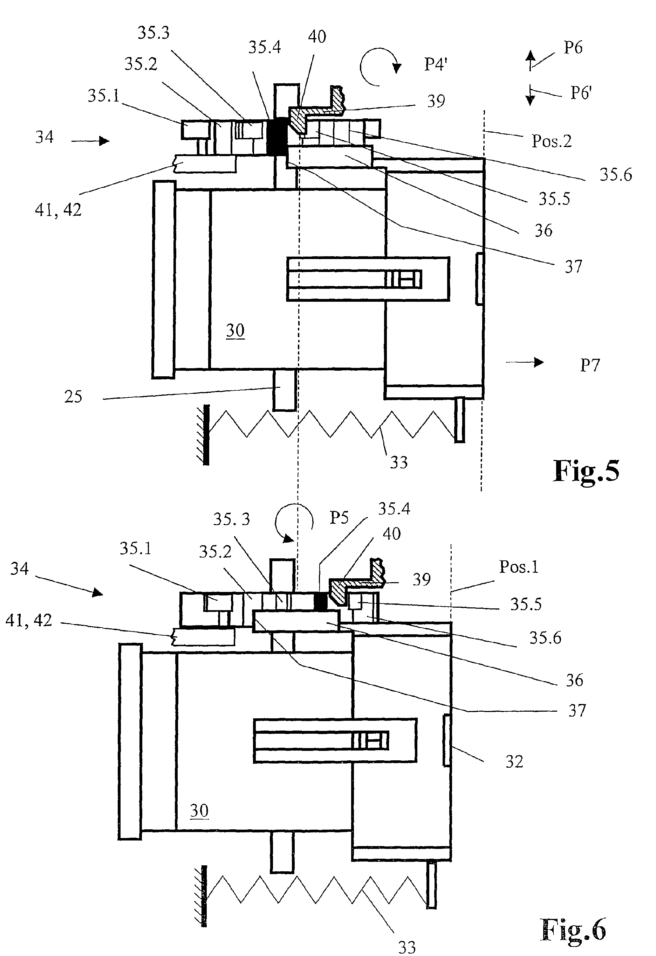

Fig. 3 zeigt einen Zustand, bei der die Klappe 24 -so wie in Fig. 2 gezeigt-geschlossen ist und der Schacht 12.1 noch nicht mit einer Karte 13.1 bestückt ist. In diesem Zustand steht die Bestückungsöffnung 11.1 in der Position Pos. 1, die nicht nur in Fig. 3, sondern auch in den Fig. 2 und 6 als strichpunktierte Linie gekennzeichnet ist. Außerdem ist der Darstellung gemäß Fig.3 entnehmbar, daß an der Klappe 24 eine Zunge 39 vorhanden ist, an deren freien Ende ein Nocken 40 ausgebildet ist, der in den Abstand zwischen zwei Zähnen 35 (35.5, 35.6) des Zahnrades 34 eingreift.

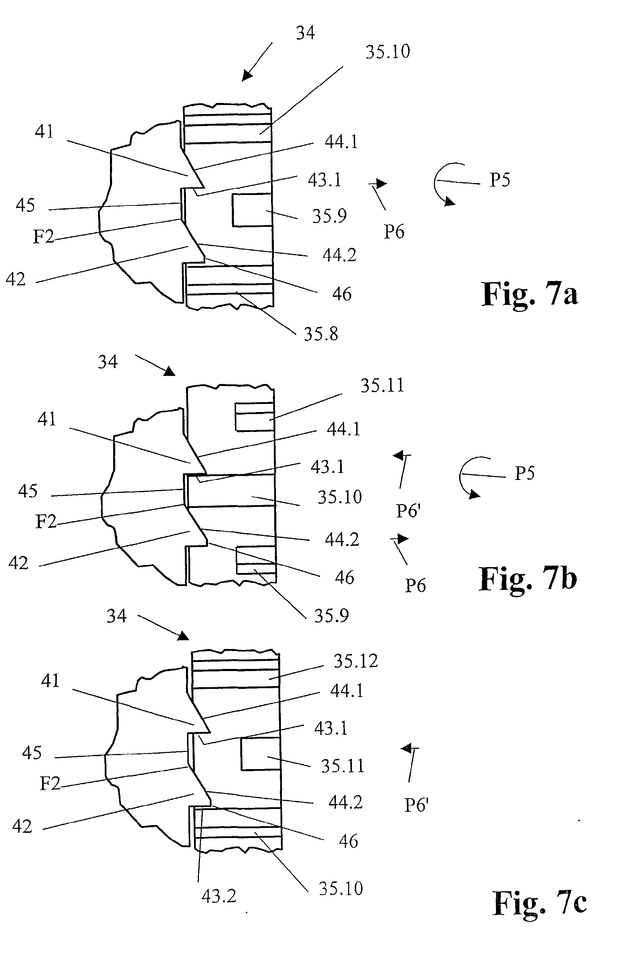

Ferner sind an der Seite des Zahnrades 34, welche dem Schlitten 30 zugewandt ist, zwei ortfeste Rampen 41, 42 angeordnet, die in den Fig. 3 bis 6 nur schematisch gezeigt sind und im Zusammenhang mit den Fig. 7a bis c näher erläutert werden. Die Darstellung gemäß Fig. 7a bezieht sich auf eine Situation, die auch in Fig. 3 gezeigt ist. Deutlich ist der Darstellung gemäß Fig.7a entnehmbar, daß zwei, in Drehrichtung P5 der Welle 25 hintereinander angeordnete Rampen 41, 42 vorhanden sind, wobei die steile Abfallkante 43.1 der Rampe 41 und der Fußpunkt F2 der Schräge 44.2 der Rampe 42 durch einen Zwischenbereich 45 getrennt sind. Außerdem ist den Fig. 7a bis c entnehmbar, daß die Rampe 42 mit einer Abplattung 46 versehen ist, die im wesentlichen zum Zwischenbereich 45 parallel verläuft.

Ist die in Fig. 3 gezeigte Situation gegeben, liegen -wie Fig. 7a zeigt- die beiden Rampen 41, 42 genau zwischen zwei geradzahligen Zähnen 35.8, 35.10 des Zahnrades 34, während der zwischen den beiden geradzahligen Zähnen 35.8, 35.10 angeordnete ungeradzahlige Zahn 35.9 dem Zwischenbereich 45 gegenübersteht.

Wird nun ausgehend von der in Fig. 3 gezeigten Situation die Klappe 24 entsprechend der in Fig. 2 gezeigten Pfeilrichtungen P1, P4 geöffnet, wird diese Öffnungsbewegung auf den Nocken 40 übertragen. Da aber der Nocken 40 mit einer rechten Seite (so wie in Fig. 3 gezeigt) in diesem Zeitpunkt an einem Zahn 35 mit geradzahliger Ordnungsziffer 35.6 anliegt, wird die Öffnungsbewegung auf das Zahnrad 35 übertragen, womit sich dieses mitsamt der Welle 25 in Pfeilrichtung P5 dreht bis sich die in Fig. 4 gezeigt Stellung des Zahnrades 34 einstellt.

Gleichzeitig mit der Drehung des Zahnrades 34 trifft der geradzahlige Zahn 35.4, der in den Fig. 3 bis 6 zur besseren Kenntlichmachung vollständig schwarz dargestellt ist, auf die vordere Kante 37 des Mitnehmers 36 und schiebt diesem zusammen mit dem Schlitten 30 in Richtung P7 in eine Position, die in Fig. 4 mit Pos.2 bezeichnet ist. Mit dem Überführen des Schlittens 30 von der Pos. 1 in die Pos.2 wird die Feder 33 gespannt.

Außerdem sind die Welle 25 und das Zahnrad 34 in Richtung (P6, P6') der Wellenachse verschiebbar angeordnet. Diese Beweglichkeit des Zahnrades 34 und der Welle 25 stellt sicher, daß durch die Rampen 41, 42 die Drehung P5 des Zahnrades 34 nicht behindert wird, sondern ausgehend von der Lage gemäß Fig. 7a unter gleichzeitiger Verschiebung des Zahnrades 34 und der Welle 25 in Richtung P6 der geradzahlige Zahn 35.10 des Zahnrades 34 an der Schräge 44.1 der Rampe 41 entlanggleiten kann. Zeitgleich mit dem Ende der Drehbewegung P5 greift dann der geradzahlige Zahn 35.10 des Zahnrad 34 unter Vollführung einer Bewegung des Zahnrades 34 und der Welle 25 in Richtung P6' in den Zwischenbereich 45 ein, so daß dann der geradzahlige Zahn mit seiner einen Seite an der steilen Abfallkante 43.1 der Rampe 41 anliegt (Fig. 7b). Das Eingreifen in den Zwischenbereich 45 wird dadurch unterstützt, daß die Bewegung des Zahnrades 34 und der Welle 25 in Richtung P6 der Wellenachse während der Gleitphase des geradzahligen Zahnes 35.10 an der Schräge 44.1 gegen eine Federkraft ausgeführt wird. Diese Federkraft wird vorliegend von der Zunge 39 (Fig. 3) bereitgestellt, welche während des Gleitens des geradzahligen Zahns an der Schräge 44.1 ebenfalls leicht in Richtung P6 der Wellenachse gebogen wird.

Hat sich nach dem Öffnen der Klappe 24 (Fig. 2 und 3) eine Situation gemäß den Fig. 4 und 7b eingestellt, ist die Feder 33 gespannt und der Schlitten 30 in seine Position Pos. 2 überführt worden. Außerdem steht der geradzahlige Zahn 35.4, welcher zur besseren Darstellung in den Fig. 3 bis 6 schwarz dargestellt wurde und welcher den Mitnehmer 36 bzw. den Schlitten 30 durch die Drehung P5 in die Position Pos. 2 gebracht hat, nach der Drehung P5 senkrecht (Fig. 4). Auch wenn die Feder 33 in der Position Pos.2 gespannt ist, muß keine Drehung des Zahnrades 34 entgegen der Drehrichtung P5 befürchtet werden, wenn nach dem vollständigen Öffnen der Klappe 24 (Fig. 2) keine Kraft mehr in Pfeilrichtung P1 wirkt. Dies ist darauf zurückzuführen, daß mit vollständigem Öffnen der Klappe 24 und dem damit verbundenen Drehen des Zahnrades 34 der geradzahlige Zahn 35.10 über die Rampe 41 geführt worden ist und mit Beendigung der Öffnungsbewegung mit seiner einen Seite an der eine Drehung entgegen der Drehrichtung P5 ausschließenden steilen Abfallkante 43.1 der Rampe 41 anliegt (Fig. 7b).

Wenn die Position Pos.2 gemäß Fig. 4 erreicht ist, kann dann durch den Durchbruch 26 in der Klappe 24 (Fig. 2) eine Karte 13.1 in den Schacht 12.1 eingeschoben werden. Letzteres ist in Fig. 4 durch den Pfeil P2 angedeutet worden. Kommt die in den Schacht 12.1 einführte Karte 13.1 mit dem Anschlag 32 in körperlichen Kontakt, hat sie ihre Endlage im Schacht 12.1 eingenommen (Fig. 2) und die Klappe 24 kann wieder geschlossen werden. Das Schließen der Klappe 24 erfolgt dergestalt, die Griffleiste 27 entgegen der Pfeilrichtung P1 so lange nach oben bewegt wird, bis sie wieder an der Gehäusewandung 10.1 anliegt. Gleichzeitig mit der Schließbewegung wird die Zunge 39 und mit ihr der Nocken 40 entgegen der Pfeilrichtung P5 gedreht (Fig. 5). Diese Verhältnisse sind in Fig. 2 durch den Pfeil 4' angedeutet.

Da wie schon im Zusammenhang mit den Fig. 7a und b ausgeführt, die Zunge 39 eine Bewegung in Richtung P6 ausführen kann und im übrigen der Nocken 40 an seiner der Drehrichtung P5 des Zahnrades 34 abgewandten Seite mit einer Fase 47 versehen ist, kommt während der Schließbewegung die Fase 47 mit einem ungeradzahligen Zahn 35.5 (Fig.4) des Zahnrades 34 in körperlichen Kontakt, wodurch die Zunge 39 -durch das einsetzende Gleiten der Fase 47- leicht in Richtung P6 gebogen wird. Gleichzeitig mit Abschluß der Schließbewegung schnappt dann Nocken 40 in einen Abstand zwischen einem geradzahligen und einem ungeradzahligen Zahn 35.4 und 35.5 des Zahnrades 34 ein, wobei die Seite des Nockens 40, an dem die Fase 47 ausgebildet ist, in Richtung des Zahns 35 mit geradzahliger Ordnungsziffer 35.4 weist. Diese Verhältnisse sind in Fig. 5 näher gezeigt.

Soll nun die in den Schacht 12.1 eingesetzte Karte 13.1 wieder aus dem Schacht 12.1 entfernt werden, muß lediglich die Klappe 24 in Pfeilrichtung P1 (Fig. 2) geöffnet werden. Wie schon oben ausgeführt, ist dazu vorher eine im Schacht 12.2 eingesetzte Karte 13.2 zu entfernen, damit die Bewegung in Pfeilrichtung P1 nicht durch die Karte 13.2 behindert wird.

Setzt die neuerliche Öffnungsbewegung in Pfeilrichtung P1; P4 ein, wird diese Bewegung über die Zunge 39 und den Nocken 40 weder auf das Zahnrad 34 und die Welle 25 übertragen, womit ausgehend von Fig. 5 die beiden letztgenannten Bauteile 25, 34 eine Drehung in Pfeilrichtung P5 vollführen. Auch wird durch die neuerliche Drehung P5 der Welle 25 und des Zahnrades 34 durch den zwischen dem (zur besseren Darstellung schwarz dargestellten) geradzahligen Zahn 35.4 des Zahnrades 34 und der vorderen Kante 37 des Mitnehmers 36 bestehenden körperlichen Kontakt der Mitnehmer 37 und mit ihm der Schlitten 30 leicht in Pfeilrichtung P7 bewegt. Insofern gelten auch hier die gleichen Grundsätze, die schon oben im Zusammenhang mit Fig. 3 erörtert wurden. Da sich mit dem Erreichen der in Fig. 5 gezeigten Lage die in Fig. 7b gezeigte Situation nicht verändert hat, gleitet durch die neuerliche Öffnungsbewegung P1 und die dadurch veranlaßte Drehung des Zahnrades 34 in Pfeilrichtung P5 der gemäß Fig. 7b im Zwischenstück 45 liegende geradzahlige Zahn 35.10 über die Schräge 44.2 der Rampe 42. Gleichzeitig mit dem Gleiten der Stirnseite des geradzahligen Zahnes 35.10 auf der Schräge 44.2 werden das Zahnrad 34 und die Welle 25 leicht in Richtung P6 bewegt. Durch die neuerliche Öffnungsbewegung P1 und durch die Bewegungen in Richtung P6 und P7 wird irgendwann ein Zeitpunkt erreicht, in welchem das zur besseren Darstellung der Verhältnisse schwarz dargestellte geradzahlige Zahnrad 35.4 keinen körperlichen Kontakt mehr zu dem Mitnehmer 36 hat. Dieser Zustand ist im wesentlichen dann erreicht, wenn ausgehend von Fig. 7b die Stirnseite das geradzahlige Zahnrad 35.10 durch die Drehung P5 die an der Rampe 42 vorhandene Abplattung 46 erreicht hat. Dieser fehlende körperliche Kontakt zwischen dem Mitnehmer 36 und dem zur besseren Darstellung der Verhältnisse schwarz dargestellten geradzahligen Zahnrad 35.4 führt dazu, daß sich die Feder 33 wieder zusammenziehen kann, womit gleichzeitig der Schlitten 30 entgegen der Pfeilrichtung P7 wieder in die Position Pos.1 gemäß Fig. 6 verbracht gebracht wird. Da während der Position Pos.2 des Schlittens 30 eine im Schacht 12.1 befindliche Karte 13.1 am Anschlag 32 des Schlittens 30 anlag (Fig. 2), wird durch die Überführung des Schlittens 30 in die Position Pos.1 die eingelegt Karte 13.1 ein Stück weit aus der Bestückungsöffnung 11.1 herausgeschoben, womit sie zur endgültigen Entnahme sehr einfach ergriffen werden kann.

Nur der Vollständigkeit halber sei darauf hingewiesen, daß mit Erreichen der Position Pos.1 gemäß Fig. 6 der geradzahlige Zahn 35.10, der vor dem Einsetzen der neuerlichen Öffnungsbewegung P1 zwischen den beiden Rampen 41, 42 stand (siehe Fig. 7b), nach dem Überschreiten der Abplattung 46 durch die schon oben erläuterte Federwirkung der Zunge 39 wieder in Richtung P6' gedrückt wird, so daß sich am Ende der Drehbewegung P5 Verhältnisse einstellen, die in Fig. 7c gezeigt sind.

Ist die Karte 13.1 vollständig entnommen worden, wird wieder ein Zustand gemäß Fig. 3 herbeigeführt, wenn die Klappe 24 durch eine Schließbewegung entgegen der Pfeilrichtung P1 (Fig. 2) bzw. Drehung P4' entsprechend der im Zusammenhang mit Fig. 5 gemachten Erläuterungen wieder geschlossen wird. Allerdings greift der Nocken 40 nach Vollendung der Drehbewegung P4' in den Abstand zwischen dem geradzahligen Zahn 35.4 und dem ungeradzahligen Zahn 35.3 des Zahnrades 35 ein.

Im folgenden soll nun das Öffnen und Schließen der Klappe 24 näher erläutert werden.

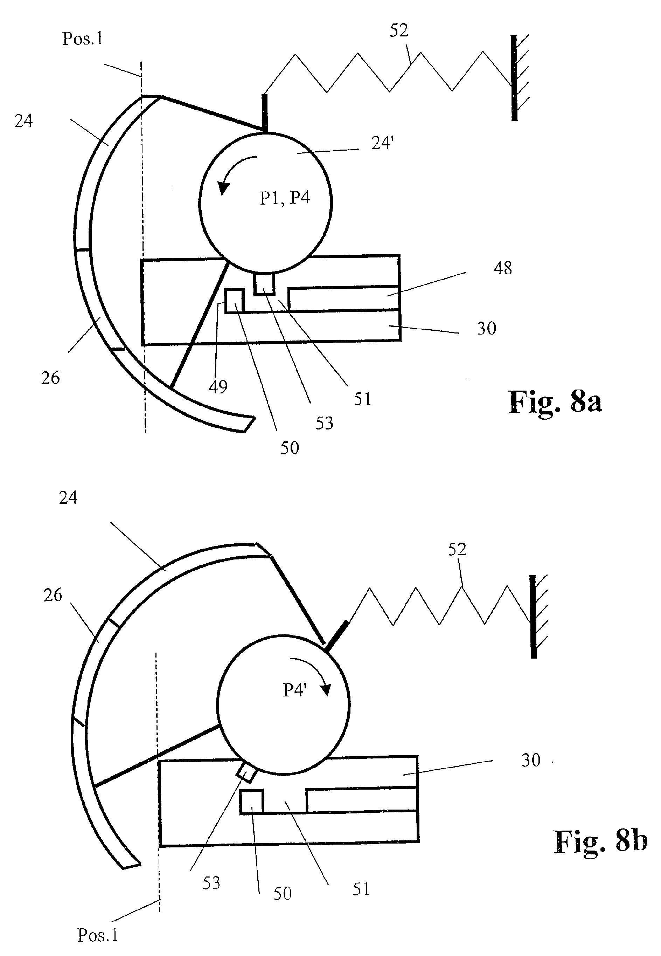

Zur Erleichterung des Schließens der Klappe 24 ist der Schlitten 30 mit einer Gleitzunge 48 versehen, die zur besseren Übersichtlichkeit in den Darstellungen gemäß der Fig. 3 bis 6 nur in Fig. 3 gezeigt ist. Diese Gleitzunge 48 weist an ihrem freien Ende 49 einen Haken 50 und eine Tasche 51 auf (Fig. 8a bis 8e). Ferner sind den schematischen Darstellungen der Fig. 8a bis 8e die Klappe 24 und die Seitenteile 24' entnehmbar.

In der Situation gemäß Fig. 8a befindet sich der Schlitten 30 in der Position Pos. 1, die auch in Fig. 3 gezeigt ist. Ferner ist die Klappe 24 durch eine Bewegung P1, P4 geöffnet worden. Letzteres ist dadurch angedeutet, daß der Durchbruch 26 der Klappe 24 vor dem Schlitten 30 steht und somit die Bestückungsöffnung 11.1 zugänglich ist. Außerdem wurde durch die Öffnungsbewegung P1, P4 die mit der Klappe 24 verbundene Feder 52, die einen zweiten Kraftspeicher bildet, gespannt.

Wirkt nun keine die Öffnungsbewegung P1, P4 auslösende Kraft mehr, vollführt die Klappe 24 eine Drehbewegung in Richtung P4' (Fig.8b), wobei die Energie für die Drehbewegung in Richtung P4' von der vorher gespannten Feder 52 bereitgestellt wird. Deutlich ist der Darstellung gemäß Fig. 8b entnehmbar, daß nach Beendigung der Drehbewegung in Richtung P4' die Klappe 24 die Bestückungsöffnung 11.1 wieder verschließt, da sich der Durchbruch 26 nach oben weggedreht hat.

Wie den Fig. 8a bis 8e entnehmbar ist, ist am Seitenteil 24' der Klappe 24 ein Zapfen 53 vorgesehen, welcher in der in Fig. 8a gezeigten Stellung leicht in die Tasche 51 hineinragt. Da die Darstellungen der Fig. 8a bis 8e deutlich zeigen, daß die Breite der Tasche 51 größer ist als die Breite des Zapfens 53, wird, wenn keine Kraft mehr in Richtung P1, P4 wirkt, die durch die Feder 52 bewirkte Drehbewegung P4' nicht durch den Haken 50 behindert, wenn sich der Schlitten 30 in der Position Pos.1 befindet.

Wird nun ausgehend von Fig. 8b die Klappe 24 zum Einstecken einer Karte 13.1 (in Fig. 8b nicht gezeigt) abermals durch eine Bewegung in Richtung P1, P4 geöffnet und der Durchbruch 26 vor die Bestückungsöffnung 11.1 gedreht, wird -wie schon oben im Zusammenhang mit den Fig. 3 und 4 erläutert- der Schlitten 30 in Richtung P7 in seine Position Pos.2 verbracht. Zeitgleich mit der Bewegung des Schlittens 30 bewegt sich der Zapfen 53 in Pfeilrichtung P1, P4. Da sich aber der Schlitten 30 durch die Überführung in die Position Pos.2 vom Zapfen 53 wegbewegt, kann der Zapfen 53 nicht mehr widerstandfrei seine Lage innerhalb der Tasche 51 einnehmen. Vielmehr wird ,wenn während der Drehbewegung P1, P4 und der Bewegung der Schlittens 30 in Richtung P7 der Zapfen 53 an den die freie Bewegung ausschließenden Haken 50 anstößt, der Haken 50 vom Zapfen 53 in Richtung P8 verdrängt. Ist die Drehbewegung P1, P4 abgeschlossen, die Feder 52 gespannt und die Klappe 24 geöffnet, liegt der Zapfen 53 so wie in Fig.8c gezeigt am Haken 50 an, womit trotz der von der gespannten Feder 52 ausgeübten Kraft eine Drehbewegung entgegen der Pfeilrichtung P1 bzw. in Pfeilrichtung P4' verhindert wird. Dieser Zustand kann genutzt werden, um eine Karte 13.1 (in Fig. 8c nicht gezeigt) in die Bestückungsöffnung 11.1 einzuführen (angedeutet durch den Pfeil P2).

Ist die Karte 13.1 in Richtung P2 einführt worden, kann die Klappe 24 wieder in Richtung P4' geschlossen werden, womit gleichzeitig die Vorgänge ablaufen, die schon im Zusammenhang mit Fig. 5 erläutert wurden. Da eine nach Fig. 8c ausgeführte Schließbewegung P4' mit keiner Positionsveränderung des Schlittens 30 verbunden ist, weicht unter Wirkung der in Richtung P4' wirkenden Kraft der Haken 50 dem Zapfen 53 in Richtung P8 aus, so daß, wenn vom Zapfen 53 der Widerstand des Hakens 51 überwunden wurde, die Feder 52 die Schließbewegung in Richtung P4' beendet. Die Klappe 24 erreicht dann eine Stellung, die in Fig. 8d gezeigt ist.

Wird nun die Klappe 24 ausgehend von der in Fig. 8d gezeigten Lage abermals geöffnet, indem die Klappe in Richtung P1, P4 bewegt wird, wird -wie im Zusammenhang mit Fig. 6 dargelegt- der Schlitten 30 von der Position Pos.2 wieder in die Pos. 1 verbracht und die Karte 13.1 aus der Bestückungsöffnung 11.1 herausgeschoben. Die für das Herausschieben der Karte 13.1 notwendige freie Beweglichkeit des Schlittens 30 wird durch den Zapfen 53 und den Haken 50 nicht beeinträchtigt, da die Anordnung so synkronisiert ist, daß der Mitnehmer 36 (Fig. 3 bis 6) erst dann nicht mehr von einem Zahn 35 mit einer geradzahligen Ordnungsziffer 35.4 behindert wird (siehe Erläuterungen zu Fig. 6), wenn der Zapfen 53 während der Drehung in Richtung P5 den Widerstand des Hakens 50 bereits überwunden hat. Ist die Öffnungsbewegung in Pfeilrichtung P5 abgeschlossen, stellen sich Verhältnisse ein, die in Fig. 8e gezeigt sind. Deutlich ist dieser Darstellung entnehmbar, daß durch die Überführung des Schlittens 30 in die Position Pos.1 die Karte 13.1 (in Fig. 8e gestrichelt angedeutet) aus der Bestückungsöffnung 11.1 und dem Durchbruch 26 herausgeschoben wurde. Ragt nach Abschluß der Öffnungsbewegung P1, P4 die Karte 13.1 auch aus dem Durchbruch 26 heraus, wird trotz einer Lage des Schlittens 30 gemäß Fig. 8a eine Schließbewegung entsprechend den Grundsätzen gemäß Fig. 8b ausgeschlossen. Die Schließbewegung in Richtung P4' (gemäß Fig. Fig. 8 b) wird vielmehr erst dann ausgeführt, wenn nach Erreichen der Lage gemäß Fig. 8e und vollständigem Entfernen der Karte 13.1 aus der Bestückungsöffnung 11.1. und dem Durchbruch 26 wieder eine in Fig. 8a gezeigte Situation erreicht ist, da sich erst nach diesem Zeitpunkt die Feder 52, welche die notwendige Energie für die Schließbewegung liefert, wieder zusammenziehen kann Nur der Vollständigkeit halber sei darauf hingewiesen, daß in den Fig. 8a bis 8e der Haken 50 und der Zapfen 53 aus Gründen der Übersichtlichkeit ohne die den gegenseitigen Eingriff erleichternde Fasen bzw. Schrägen dargestellt wurden.

## Patentansprüche

1. Karten-Leseanordnung
mit einem ersten, eine Bestückungsöffnung 11.1 habenden Schacht 12.2 zur Aufnahme einer mit einem Speicher 14.2 versehenen Karte 13.2
dadurch gekennzeichnet,
daß ein zweiter, ebenfalls eine Bestückungsöffnung 11.1 habender Schacht 12.1 zur Aufnahme einer mit einem Speicher 14.1 versehenen weiteren Karte 13.1 vorgesehen ist und
daß an der Bestückungsanordnung 11.1 des zweiten Schachts eine Verschlußanordnung 24 vorgesehen ist, die bei einem mit einer Karte 13.2 bestückten ersten Schacht 12.2 das Einführen und das Entnehmen der weiteren Karte 13.1 in bzw. aus dem zweiten Schacht 12.2 ausschließt.

2. Karten-Leseanordnung
mit einem ersten, eine Bestückungsöffnung 11.2 habenden Schacht 12.2 zur Aufnahme einer mit einem Speicher 14.2 versehenen Karte 13.2
dadurch gekennzeichnet,
daß ein zweiter, ebenfalls eine Bestückungsöffnung 11.1 habender Schacht 12.1 zur Aufnahme einer mit einem Speicher 14.1 versehenen weiteren Karte 13.1 vorgesehen ist und
daß eine Überwachungsanordnung 21,22 vorhanden ist, die ein Einbuchen einer in den zweiten Schacht 12.1 eingeschobenen Karte 13.1 ausschließt, wenn bereits der erste Schacht 12.2 mit einer Karte 13.2 bestückt ist, und die bei einer in der zweiten Schacht 12.1 eingeschobenen Karte 13.1 deren Lage im zweiten Schacht 12.1 überwacht und bei eintretenden Lageänderungen die im ersten Schacht 12.2 befindliche Karte 13.2 ausbucht.

3. Karten-Leseanordnung nach Anspruch 1 oder Anspruch 2
dadurch gekennzeichnet,
daß die beiden Schächte 12.1, 12.2 übereinander angeordnet sind, wobei die Bestückungsöffnungen 11.1, 11.2 der beiden Schächte 12.1, 12.2 in die gleiche Richtung weisen.

4. Karten-Leseanordnung nach einem der Ansprüche 1 oder 3
dadurch gekennzeichnet,
daß die Verschlußanordnung eine mit einem Sperrfuß 28 versehene bewegliche Klappe 24 ist, die in einer ersten Stellung die Bestückungsöffnung 11.1 des zweiten Schachts 12.1 freigibt und in ihrer zweiten Stellung die Bestückungsöffnung 11.1 verschließt, wobei der Sperrfuß 28 bei einer in den ersten Schacht 12.2 eingesetzten Karte 12.2 zum Ausschluß der Beweglichkeit der Klappe 24 an der in den ersten Schacht 12.2 befindlichen Karte 13.2 anliegt.

5. Karten-Leseanordnung nach Anspruch 1, 3 oder 4
dadurch kennzeichnet,
daß eine Auswerferanordnung am zweiten Schacht 12.1 vorgesehen ist, die eine in den zweiten Schacht 12.1 eingeschobene Karte 13.1 aus der Bestückungsöffnung 11.1 herausdrückt, wenn die Verschlußanordnung 24 die Zugänglichkeit der Bestückungsanordnung 11.1 am zweiten Schacht 12.1 freigibt.

6. Karten-Leseanordnung nach Anspruch 5
dadurch gekennzeichnet,
daß die Auswerferanordnung im wesentlichen von einer Mechanik gebildet ist, die erst durch das Schließen und/oder das Öffnen der Verschlußanordnung 24 die mechanische Energie für das Auswerfen der im zweiten Schacht 12.1 eingeschobenen Karte 13.1 liefert.

7. Karten-Leseanordnung nach Anspruch 6
dadurch gekennzeichnet,
daß die Auswerferanordnung einen in Einschub- und Auswerfrichtung P2, P3 der in der in den zweiten Schacht 12.1 einschiebbaren Karte 13.1 beweglichen Schlitten 30,
ein auf einer drehbaren Welle 25 angeordnetes und in Richtung der Wellenachse verschiebbares Zahnrad 34 , dessen Zähne 35 mit geradzahliger Ordnungsziffer (35.2, 35.4, 35.6,...) im Vergleich zu den Zähnen 35 mit ungeradzahliger Ordnungsziffer (35.1, 35.3, 35.5,...) in Richtung der Wellenachse eine größere Breite haben,
einen mit dem Schlitten 30 verbundenen Mitnehmer 36, dessen eine vordere Kante 37 zum körperlichen Kontakt mit den Zähnen 35 mit geradzahliger Ordnungsziffer (35.2, 35.4, 35.6,...) bestimmt ist und dessen Längskante 38 einen geringen Abstand zu den Zähnen 35 mit ungeradzahliger Ordnungsziffer (35.1, 35.3, 35.5,...) einhält,
eine mit der Verschlußanordnung 24 verbundene Zunge 39, die nicht nur in Richtung der Wellenachse, sondern auch in Drehrichtung der Welle 25 beweglich ist und die an ihrem freien Ende einen zum Eingriff in den Abstand zwischen einem gerad- und einem ungeradzahligen Zahn 35 (35.1, 35.2; 35.2, 35.3) des Zahnrades 34 bestimmten Nocken 40 hat,
zwei ortsfeste, in Drehrichtung der Welle 25 hintereinander angeordnete Rampen 41,42, die zeitweise mit den Stirnflächen der Zähne 35 mit geradzahliger Ordnungsziffer (35.2, 35.4, 35.6,...) in körperlichem Kontakt stehen, und einen ersten Kraftspeicher 33 aufweist, der mit dem Schlitten 30 verbunden ist.

8. Karten-Leseanordnung nach Anspruch 7
dadurch gekennzeichnet,
daß ein zweiter Kraftspeicher 52 vorhanden ist, der mit der Verschlußanordnung 52 verbunden ist und der, wenn die Verschlußanordnung 24 geöffnet ist, Energie gespeichert hat.

9. Karten-Leseanordnung nach Anspruch 8
dadurch gekennzeichnet,
daß mit dem Schlitten 30 eine Gleitzunge 48 verbunden ist, die den Bewegungen des Schlittens 30 folgt und deren freies Ende als beweglicher Haken 50 ausgebildet ist, und
daß an der Verschlußanordnung 24 ein Zapfen 53 vorgesehen ist, der, wenn die Verschlußanordnung 24 zum Einschieben einer Karte 13.1 in den Schacht 12.1, vom beweglichen Haken 50 zur Verhinderung der Entladung der im zweiten Kraftspeicher 52 gespeicherten Energie arretiert wird.
